# EUROPEAN PATENT APPLICATION

(11) **EP 2 919 122 A1**
(43) Date of publication of application: **16.09.2015**
(21) Application number: 13853380.7
(22) Date of filing: 07.11.2013
(51) Int. Cl.: G06F 13/00, G06F 15/00, G06Q 30/02

(54) **INFORMATION PROCESSING SYSTEM AND INFORMATION PROCESSING METHOD**

(30) Priority: 09.11.2012 JP 2012247543
(71) Applicant: KPI Solutions Co., Ltd., Chuo-ku, Tokyo 104-0061 (JP)
(72) Inventor: ISHIDA, Tetsuro, Tokyo 108-0023 (JP); HEUNGMANY, Bounnong, Tokyo 104-0061 (JP)
(74) Representative: Cabinet Plasseraud
(86) International application number: PCT/JP2013/080140
(87) International publication number: WO 2014/073614

(57) **Abstract**

Disclosed are an information processing system and an information processing method capable of increasing the effect of advertisement distribution. The information processing system includes a cookie processing unit 110 which transmits a cookie 221 to a client 20 when the client 20 accesses a member site, receives a user ID for logging in to the member site from the client 20, and receives a notification indicating the completion of the login from the client 20 when having logged in, a database 130 which is able to manage cookie information received from the client 20 based on the cookie 221 in coordination with member attribute information 133 pertaining to the user ID, and an advertisement determination unit 120 which determines an advertisement to be distributed to the client 20 based on the member attribute information 133 after the notification indicating the completion of the login is received from the client 20.

## Description

### Technical Field

Some aspects of the invention relate to an information processing system and an information processing method.

### Background Art

In recent years, as means for distributing advertisements on the Internet, a service, called an advertising network (also referred to as "advertisement network" or "AD network"), which distributes advertisements from an advertising network server (also referred to as "advertisement server", "advertising server", "AD network server", or the like) of an advertisement distributor over advertisement display mediums of a plurality of advertisement distributors is provided. In the advertising network, the advertisement distributor which provides the advertising server distributes advertisements to a plurality of advertisement display mediums which constitute the advertising network. If an advertiser orders an advertisement from one advertisement distributor which provides an advertising network, the advertisement can be distributed to a plurality of advertisement display mediums which constitute the advertising network. An advertisement display medium refers to a media site which provides an advertisement display frame to a third party.

Even if an advertisement is distributed randomly, the advertisement effect is low. Accordingly, a method of increasing the advertisement effect by determining a user to be a target of an advertisement is considered. For example, Patent Document 1 discloses a method which enables an advertising server to count information regarding the number of connections to a specific site of a user using a cookie to track the use of the Internet by the user.

### Citation List

### Patent Document

Patent Document 1: JP2011-138518 A

### Disclosure of the Invention

### Problem to be Solved by the Invention

As described in Patent Document 1, after the behavior history of the user is acquired using the cookie, advertisement distribution is performed, whereby the accuracy of an advertisement to be distributed can be increased compared to a case where a cookie is not used. Here, the behavior history can include the history of a series of behavior, such as page browsing on an advertisement display medium, article purchasing, and advertisement image clicking by the user.

However, in the method described in Patent Document 1, only information regarding the number of connections to a site or the like can be used. Accordingly, there is a limit to the advancement of the accuracy of the advertisement. For example, when the site is a membership site, it is meaningless to provide an advertisement for recommending a user to become a member of the site to the user who is already a member of the site, and it is difficult to avoid such a situation with information regarding only the behavior history of the user. It is desirable to perform advertisement distribution according to the attribute of each user, for example, to give a notification of privilege information exclusive for members to a user who is already a member, instead of issuing an invitation to a member.

Some aspects of the invention have been accomplished in consideration of the above-described problems, and one object of some aspects of the invention is to provide an information processing system and an information processing method capable of increasing the effect of advertisement distribution.

### Means for Solving the Problem

An information processing system according to an aspect of the invention includes cookie transmission means for transmitting a cookie to a client terminal when the client terminal accesses a member site, first reception means for receiving a user ID for logging in to the member site from the client terminal, second reception means for receiving, from the client terminal, a notification indicating the completion of the login when the client terminal logs in to the member site, information management means for managing cookie information received from the client terminal based on the cookie in coordination with attribute information of a member pertaining to the user ID, and advertisement determination means for determining an advertisement to be distributed to the client terminal based on attribute information managed by the information management means after the notification indicating the completion of the login is received from the client terminal.

An information processing system which provides a member site according to another aspect of the invention includes first transmission means for transmitting a program which causes a client terminal to acquire a first cookie from an advertisement determination server, to transmit a user ID input at the time of login to the advertisement determination server, and to transmit a notification indicating the completion of the login to the advertisement determination server when the login is completed.

An information processing method according to a further aspect of the invention causes an information processing system to perform a step of transmitting a cookie to a client terminal when the client terminal accesses a member site, a step of receiving a user ID for logging in to the member site from the client terminal, a step of receiving a notification indicating the completion of the login from the client terminal when the client terminal logs in to the member site, a step of managing cookie information received from the client terminal based on the cookie in coordination with attribute information of a member pertaining to the user ID, and a step of determining an advertisement to be distributed to the client terminal based on the attribute information pertaining to the user ID after the notification indicating the completion of the login is received from the client terminal.

An information processing method for an information processing system which provides a member site according to still another aspect of the invention includes a step of transmitting a program which causes a client terminal to acquire a first cookie from an advertisement determination server, to transmit a user ID input at the time of login to the advertisement determination server, and to transmit a notification indicating the completion of the login to the advertisement determination server after the login is completed.

In the invention, the terminology "unit", "means", "device", or "system" does not necessarily mean physical means, but includes the case where the function of each "unit", "means", "device", or "system" is implemented by software. The function of one "unit", "means", "device", or "system" may be implemented by two or more physical means or devices, or the functions of two or more "units", "means", "devices", or "systems" may be implemented by one physical means or device.

### Effect of the Invention

According to the invention, it is possible to provide an information processing system and an information processing method capable of increasing the effect of advertisement distribution.

### Brief Description of the Drawings

Fig. 1 is a diagram illustrating the overview of an advertisement distribution system according to an embodiment of the invention.
Fig. 2 is a functional block diagram illustrating an example of the functional configuration of the advertisement distribution system illustrated in Fig. 1.
Fig. 3 is a flowchart illustrating an example of the flow of processing of a client illustrated in Fig. 1.
Fig. 4 is a flowchart illustrating an example of the flow of processing of a server for advertisement determination illustrated in Fig. 1.
Fig. 5 is a flowchart illustrating an example of the flow of processing of an advertisement server illustrated in Fig. 1.
Fig. 6 is a flowchart illustrating an example of the flow of processing of the client illustrated in Fig. 1.
Fig. 7 is a flowchart illustrating an example of the flow of processing of the server for advertisement determination illustrated in Fig. 1.
Fig. 8 is a flowchart illustrating an example of the flow of processing of the client illustrated in Fig. 1.
Fig. 9 is a flowchart illustrating an example of the flow of processing of the advertisement server illustrated in Fig. 1.
Fig. 10 is a flowchart illustrating an example of the flow of processing of the server for advertisement determination illustrated in Fig. 1.
Fig. 11 is a block diagram illustrating the configuration of hardware capable of mounting the server for advertisement determination or the advertisement server illustrated in Fig. 1.

### Mode for Carrying out the Invention

Hereinafter, an embodiment of the invention will be described. In the following description and the drawings to be referred to, the same or similar parts are represented by the same or similar reference numerals.

### (Embodiment)

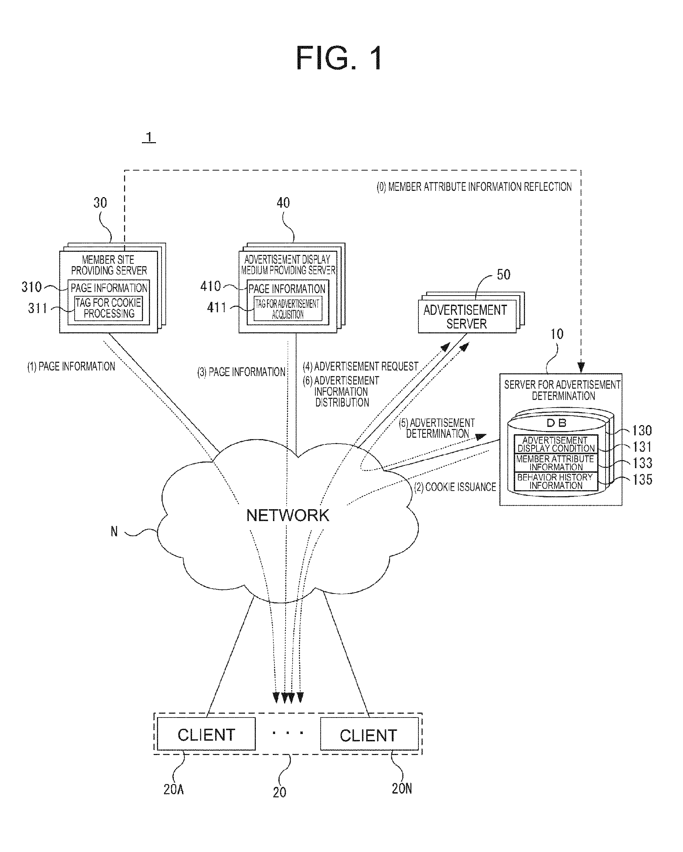

Figs. 1 to 11 are diagrams illustrating an embodiment. Hereinafter, the embodiment will be described along the flow described below referring to the drawings. First, the outline of a system according to the embodiment will be described in "1". Next, the functional configuration of the system will be described in "2", the flow of processing pertaining to each device during cookie distribution and during advertisement distribution will be described in "3". A specific example of the hardware configuration capable of implementing a server for advertisement determination 10 or an advertisement server 50 will be described in "4". Finally, the effects of this embodiment and the like will be described in "5".

### (1 Overview)

### (1.1 Overview of System)

Fig. 1 is a diagram illustrating the schematic configuration of an advertisement distribution system 1 including an information processing system according to this embodiment. As illustrated in Fig. 1, the advertisement distribution system 1 of this embodiment includes a server for advertisement determination 10, a client 20 (clients 20A and 20N are collectively referred to as a client 20), at least one member site providing server 30, at least one advertisement display medium providing server 40, and at least one advertisement server 50. The server for advertisement determination 10, the client 20 (also referred to as a client terminal 20), the member site providing server 30, the advertisement display medium providing server 40, and the advertisement server 50 are communicable with one another through the Internet N.

The overview of the system will be simply described. The client 20 can access a member site (refers to a membership site or refers to a site which requires a login with a user ID, a password, and the like so as to browse at least a part of web pages in the site) which is provided by the member site providing server 30, a website which is provided by the advertisement display medium providing server 40, and the like. A provider of the member site which is provided by the member site providing server 30 is an advertiser which displays an advertisement on the screen of the website provided by the advertisement display medium providing server 40.

Page information 310 constituting the member site provided by the member site providing server 30 is embedded with a tag for cookie processing 311 which is a program described in, for example, JavaScript (Registered Trademark) or the like. The client 20 acquires a cookie from the server for advertisement determination 10 or the advertisement server 50 according to the description of the tag for cookie processing 311 when accessing the member site provided by the member site providing server 30.

Page information 410 constituting the website provided by the advertisement display medium providing server 40 is embedded with a tag for advertisement acquisition 411 which is a program described in, for example, JavaScript (Registered Trademark) or the like. A browser of the client 20 displays an advertisement according to advertisement information (corresponding to advertisement positional information described below) received from the advertisement server 50 on the screen of the website according to the description of the tag for advertisement acquisition 411 when accessing the website (media site) provided by the advertisement display medium providing server 40. That is, the advertisement server 50 and the advertisement display medium providing server 40 constitute a single advertisement network. An advertisement display medium refers to a media site which provides an advertisement display frame to a third party.

The advertisement information which is provided to the client 20 by the advertisement server 50 is determined by the server for advertisement determination 10 under advertisement display conditions 131. The server for advertisement determination 10 sends advertisement information of an advertisement conforming to the advertisement display conditions 131 to the advertisement server 50 based on the member attribute information 133 or the behavior history information 135 of the member if the client 20 which displays an advertisement pertains to a member of an advertiser. A determination method regarding whether or not the client 20 which displays the advertisement pertains to a member of an advertiser will be described below.

In this way, in the advertisement distribution system 1 of this embodiment, if the cookie which is issued by the server for advertisement determination 10 or the advertisement server 50 is set in the client 20, the user who has logged in to the member site once can receive the distribution of a suitable advertisement according to the browsing behavior of the user or the member attribute unless the cookie is deleted.

In particular, the advertisement server 50 of this embodiment can perform the advertisement distribution based on attribute information which is managed on the member site provided by the member site providing server 30 even if the advertisement server 50 is other than the manager of the member site providing server 30. At this time, the advertisement distribution based on the attribute information becomes possible in an advertisement display medium in an advertisement network constituted by all advertisement servers 50 which can refer to the server for advertisement determination 10.

In this way, not only the advertisement distribution is performed based on information (also referred to as audience data) incapable of specifying an individual, such as a browsing record or an IP address of a site, but also the advertisement distribution based on the attribute information registered in the member site is possible for a website other than the member site or a website on another advertisement network. This point is one of the features of the advertisement distribution system 1.

### (1.2 Overview of Processing of System)

As described above, the member site providing server 30 is a server which provides a website to which the member login is possible. If an access from the client 20 is received, the member site providing server 30 can transmit webpage information designated by an accessed URL (Uniform Resource Locator) to the client 20 (in the drawing, (1)). While a user of a non-member can access a part of a site which is provided by the member site providing server 30, for example, in order to browse member-exclusive contents or to receive a point service or the like, the login of the user is required.

In order for a member to log in to the member site providing server 30, the member registers various kinds of attribute information, such as name, sex, address, and date of birth in advance and then receives the issue of a user ID and a password. The user logs in using the user ID and the password.

A provider of the member site providing server 30 sends member attribute information 133 to the server for advertisement determination 10 automatically or manually (in the drawing, (0)). With this, the advertisement distribution according to the member attribute information 133 becomes possible. At this time, when using the registered attribute information of the user for the advertisement distribution, it is preferable to obtain the prior consent (opt-in) of the user, and it is desirable to use only the attribute information with the prior consent for the advertisement distribution.

The page information 310 which is provided by the member site providing server 30 is embedded with the tag for cookie processing 311 for setting a cookie in the browser of the client 20. When the page information 310 is received from the member site providing server 30, the client 20 acquires the cookies from the server for advertisement determination 10 and the advertisement server 50 according to the tag for cookie processing 311 embedded in the webpage information (in the drawing, (2); however, the cookie acquisition from the advertisement server 50 is not illustrated). When a cookie is already set in the browser, this processing is not required. If a cookie is set in the client 20, information pertaining to a series of behavior, such as page browsing, article purchasing, and advertisement image clicking by the user can be transmitted to the server for advertisement determination 10 or the advertisement server 50. In particular, information transmitted to the server for advertisement determination 10 is stored in a DB 130 as behavior history information 135. With this, the server for advertisement determination 10 can make the advertisement server 50 transmit advertisement information determined based on the behavior history information 135.

Since the cookie transmitted from the server for advertisement determination 10 to the client 20 is assigned before the login, the cookie is not associated with the member attribute information 133 at the beginning and is in a temporary state in which a temporary identifier is assigned. Thereafter, if the user succeeds in logging in to the member site, the tag for cookie processing 311 gives a notification of information regarding the user ID together with information indicating a successful login to the server for advertisement determination 10, whereby the cookie can be referred to as a cookie in a member state. A cookie in a member state can be associated with the member attribute information 133 of the user based on the user ID. Therefore, the server for advertisement determination 10 can make the advertisement server 50 to transmit advertisement information determined based on the member attribute information 133.

The advertisement display medium providing server 40 is a server which provides an advertisement display medium embedded with the tag for advertisement acquisition 411 for acquiring an advertisement to be distributed by the advertisement server 50 (in the drawing, (3)). The page information 410 constituting each page in a site (advertisement display medium) provided by the advertisement display medium providing server 40 is embedded with the tag for advertisement acquisition 411 described in, for example, JavaScript (Registered Trademark) or the like for displaying an advertisement. The client 20 transmits an advertisement acquisition request to the advertisement server 50 based on the tag for advertisement acquisition 411 (in the drawing, (4)).

If the advertisement acquisition request from the client 20 is received, the advertisement server 50 performs bidding/tendering processing as necessary and then requests the server for advertisement determination 10 to determine an advertisement to be displayed (in the drawing, (5)). At this time, information (when the user ID cannot be acquired, information regarding the temporary ID) regarding the user ID of the user who operates the client 20 is sent to the server for advertisement determination 10 based on the cookie set in the client 20 by the advertisement server 50. With this, the server for advertisement determination 10 determines an advertisement suitable for the user based on the member attribute information 133, the behavior history information 135, or the advertisement display conditions 131 of the member corresponding to the user ID and sends information regarding the advertisement to the advertisement server 50. The advertisement server 50 transmits the advertisement information to the client 20, and the client 20 displays the advertisement based on the advertisement information on the display screen.

At this time, the advertisement server 50 or the server for advertisement determination 10 may manage only the user ID, and does not need to manage the password. Accordingly, the security of the user can be secured.

### (2 Functional Configuration of System)

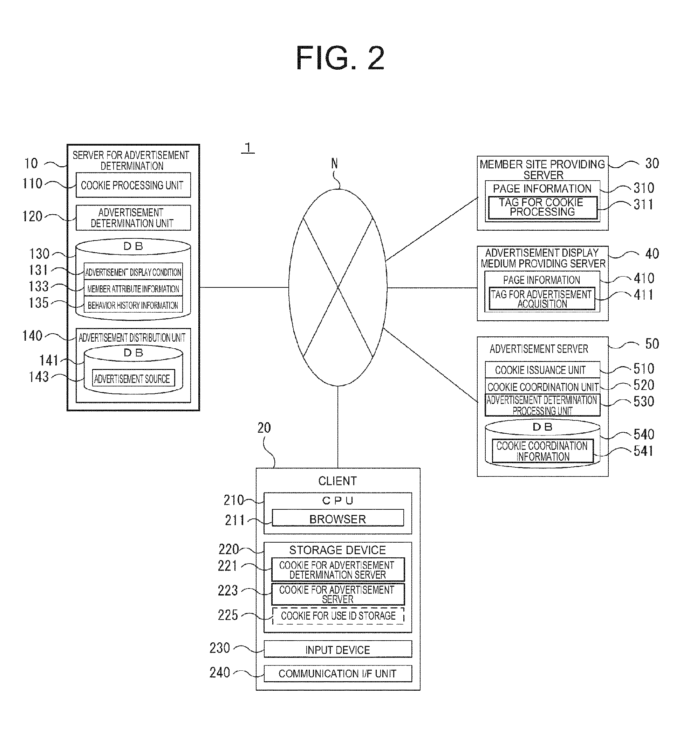

Subsequently, the functional configuration of each device which constitutes the advertisement distribution system 1 will be described referring to Fig. 2. Fig. 2 is a functional block diagram illustrating the function of each device which constitutes the advertisement distribution system 1.

### (2.1 Server for Advertisement Determination 10)

First, the server for advertisement determination 10 will be described. As described above, the server for advertisement determination 10 transmits a cookie 221 to the client 20, determines an advertisement to be distributed to the client 20, and transmits the advertisement to the client 20. At this time, an advertisement to be distributed to the client 20 can be suitably determined based on the user ID (when the cookie 221 is in a temporary state, the temporary ID) which can be acquired from the client 20 based on the cookie 221.

The server for advertisement determination 10 broadly includes a cookie processing unit 110, an advertisement determination unit 120, a database (DB) 130, and an advertisement distribution unit 140.

The cookie processing unit 110 transmits the cookie 221 in response to a request from the client 20 and manages information pertaining to the cookie 221 in association with the member attribute information 133 and the behavior history information 135 on the DB 130. As described above, the cookie 221 issued by the cookie processing unit 110 is in a temporary state at the beginning and is assigned with the temporary ID not associated with the user ID. The client 20 in which the cookie 221 is set assigns the temporary ID and then transmits cookie information pertaining to the behavior history information 135. However, if the user succeeds in logging in to the member site providing server 30, the cookie processing unit 110 receives information indicating a successful login and information regarding the user ID from the client 20. Therefore, the cookie processing unit 110 updates the database 130 based on these kinds of information and manages the cookie in a member state. With this, thereafter, the cookie information transmitted from the client 20 based on the cookie can be managed in coordination with the user ID.

The advertisement determination unit 120 provides an API (Application Programming Interface), for example, as an interface for the advertisement server 50. The advertisement determination unit 120 determines an advertisement to be distributed to the client 20 in response to a request from the advertisement server 50 through the API. The advertisement determination unit 120 outputs positional information (address information for acquiring an advertisement source 143, for example, a URL (Uniform Resource Locator)) for acquiring the advertisement source 143 of the determined advertisement to the advertisement server 50.

At the time of API calling from the advertisement server 50, the advertisement determination unit 120 receives information regarding the user ID (or the temporary ID). Therefore, the advertisement determination unit 120 acquires the member attribute information 133 and the behavior history information 135 corresponding to the user ID and then determines an advertisement conforming to these kinds of information by the advertisement display conditions 131. With this, for example, the advertisement distribution according to the detailed advertisement display conditions 131, such as "for a man in his 30's", "for a person who lives in OO, Tokyo and purchases a commodity OO", or the like.

The advertisement determination unit 120 may perform bidding/tendering processing according to RTB (Real Time Bidding) as necessary in order to determine an advertiser which displays an advertisement. It is also considered that the RTB is performed by the advertisement determination processing unit 530 on the advertisement server 50 side.

The database 130 manages the advertisement display conditions 131, the member attribute information 133, and the behavior history information 135.

The advertisement display conditions 131 operate the member site providing server 30 and set the conditions for the attribute or the behavior history of the user for whom the advertiser which provides the advertisement source 143 is about to display an advertisement and positional information (corresponding to address information, such as a URL, and also referred to as advertisement information or advertisement positional information) of the advertisement source 143 to be distributed to a user conforming to the conditions.

The member attribute information 133 manages attribute information pertaining to at least one member (user) of the member site provided by the member site providing server 30. The member attribute information 133 is mechanically or manually registered by the manager of the member site providing server 30 which is an advertiser. When there is a plurality of managers (advertisers) of the member site providing server 30, the member attribute information 133 is registered for each manager.

The member attribute information 133 includes various kinds of information, such as sex, date of birth (age), address (or residential area), and member points, in addition to the user ID which is identification information for individually identifying each member. When information regarding the user ID is acquired from the advertisement server 50, the advertisement determination unit 120 refers to the member attribute information 133 according to the user ID and then selects an advertisement conforming to the advertisement display conditions 131.

The behavior history information 135 is managed based on the cookie information which is the browsing information or the like of the user in the member site notified by the cookie 221 from the client 20. When the cookie 221 is in a temporary state, the behavior history information 135 is managed in coordination with the temporary ID. Meanwhile, if the user logs in to the member site and the cookie 221 is placed in a member state, the behavior history information 135 is associated with the user ID by the cookie processing unit 110. The advertisement determination unit 120 refers to the behavior history information 135 corresponding to the user ID or the temporary ID and then selects an advertisement conforming to the advertisement display conditions 131.

The advertisement distribution unit 140 transmits the advertisement source 143 in response to a request from the client 20. At this time, the client 20 accesses the advertisement source 143 based on the advertisement positional information output from the advertisement determination unit 120 to the client 20 through the advertisement server 50. Therefore, the advertisement distribution unit 140 transmits the advertisement source 143 according to the accessed advertisement positional information to the client 20.

The advertisement source 143 which is managed by the DB 141 is image data or the like of an advertisement which is displayed on the website (advertisement display medium) provided by the advertisement display medium providing server 40, and is prepared in advance by the advertiser.

It is also considered that the function of the server for advertisement determination 10 is implemented by a plurality of information processing apparatuses. For example, the advertisement distribution unit 140 may be implemented as an information processing apparatus different from the server for advertisement determination 10.

### (2.2 Client 20)

Subsequently, the client 20 will be described. The client 20 is an information processing apparatus which can access a member site provided by the member site providing server 30 or an advertisement display medium provided by the advertisement display medium providing server 40. As a specific example of the client 20, for example, a PC (Personal Computer), a mobile phone terminal (may be or may not be a so-called feature phone or a smartphone), a slate type tablet terminal, and the like are considered.

The client 20 generally has a CPU 210, a storage device 220, an input device 230, a communication I/F unit 240, and the like.

The CPU 210 executes a program stored in the storage device 220, thereby controlling various kinds of processing in the client 20. A browser 211 which can browse various webpages to be received from the member site providing server 30 or the advertisement display medium providing server 40 primarily runs on the CPU 210.

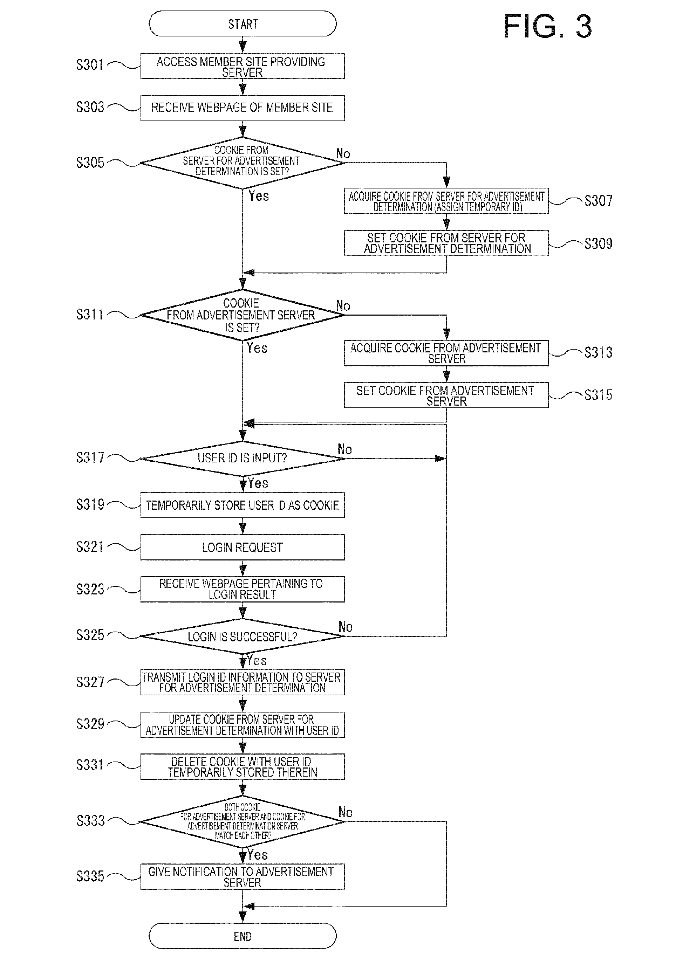

The storage device 220 is, for example, various storage mediums, such as an HDD (Hard Disk Drive) and a flash memory. The storage device 220 stores various program codes, such as the browser 211 which is executed by the CPU 210, and data required for executing a program. In particular, a cookie for advertisement determination server 221 or a cookie for advertisement server 223 which is set in the browser 211 is stored in the storage device 220. In addition, when temporarily storing a user ID as a cookie, a cookie for user ID storage 225 is also stored in the storage device 220. The cookie for user ID storage 225 will be described below referring to Fig. 3 and the like.

As described above, the cookie for advertisement determination server 221 is transmitted from the server for advertisement determination 10. The acquisition of the cookie 221 is performed based on the tag for cookie processing 311 included in the page information 310 received from the member site providing server 30 by the browser 211. The cookie 221 has two states of a temporary state not associated with the user ID and a member state associated with the user ID. As described above, if the login to the member site provided by the member site providing server 30 is successful, the cookie 221 is changed from the temporary state to the member state by the tag for cookie processing 311. The cookie information transmitted to the server for advertisement determination 10 by the browser 211 based on the cookie 221 in the member state is managed in association with the user ID.

The cookie for advertisement server 223 is set by the advertisement server 50. The cookie 223 includes an identifier for allowing the advertisement server 50 to identify the client 20, and the cookie 223 transmits the cookie information including the identifier to the advertisement server 50 based on the cookie 223 at each timing including an advertisement display time.

While the cookie for advertisement server 223 is set in the browser 211 at any timing, for example, it is considered that the cookie for advertisement server 223 is set by the tag for advertisement acquisition 411 embedded in the page information 410 of the website provided by the advertisement display medium providing server 40 in the advertisement network constituted by the advertisement server 50, the tag for cookie processing 311 embedded in the page information 310 of the website provided by the member site providing server 30, or the like. In this embodiment, description will be provided focusing on a case where the tag for cookie processing 311 sets the cookie for advertisement server 223.

The cookie 221 or 223 transmits various kinds of cookie information to the server for advertisement determination 10 or the advertisement server 50 unless deleted. Therefore, the server for advertisement determination 10 can distribute a suitable advertisement to the client 20 based on the behavior history information 135, such as a browsing history which can be acquired as a result of the operation of the cookies 221 and 223, or identification information (user ID) of the user.

The input device 230 is a device which is used when the user inputs various kinds of information. For example, a pointing device, such as a mouse or a touch pad, a keyboard, or the like corresponds to the input device 230. Various selection devices pertaining to the browsing of the webpage using the browser 211 are input by the input device 230.

The communication I/F unit 240 is an interface which is used when the client 20 performs communication with another information processing apparatus through the Internet N.

### (2.3 Advertisement Server 50)

Next, the advertisement server 50 will be described. The advertisement server 50 is a server which constitutes an advertisement network for distributing an advertisement together with the advertisement display medium providing server 40.

In this embodiment, the advertisement server 50 has a cookie issuance unit 510, a cookie coordination unit 520, and an advertisement determination processing unit 530.

The cookie issuance unit 510 issues the cookie 223 with the identifier for identifying each client 20 in response to a request from the client 20. With this, when displaying an advertisement on the advertisement display medium provided by the advertisement display medium providing server 40, the notification of the identifier for identifying the client 20 to the advertisement server 50 can be received through the cookie information transmitted by the cookie 223.

The cookie coordination unit 520 generates cookie coordination information 541, in which the identifier for identifying the client 20 to be received from the cookie 223 is coordinated with the user ID, in response to a request from the client 20. The request from the client 20 is made based on the tag for cookie processing 311 included in the page information 310 transmitted from the member site providing server 30 by the browser 211.

The advertisement determination processing unit 530 performs processing for determining an advertisement to be displayed on the client 20 in response to the advertisement acquisition request from the client 20. Specifically, the advertisement determination processing unit 530 knows a user ID corresponding to an identifier to be acquired from the client 20 based on the cookie 223 by referring to the cookie coordination information 541. Then, the advertisement determination unit 120 of the server for advertisement determination 10 is requested so as to determine an advertisement based on the user ID. The advertisement determination processing unit 530 may perform bidding/tendering processing by RTB as necessary beforehand, thereby determining an advertiser. If positional information (address information/advertisement information) for acquiring the advertisement source 143 pertaining to the determined advertisement is received from the advertisement determination unit 120 of the server for advertisement determination 10, the advertisement determination processing unit 530 transmits the positional information to the client 20. The client 20 acquires the advertisement source 143 based on the positional information and displays an advertisement image or the like based on the advertisement source 143 on the display screen.

### (3 Flow of Processing)

Hereinafter, the flow of processing of the advertisement distribution system 1 of this embodiment will be described referring to Figs. 3 to 10. Respective processing steps described below can be executed after the sequence is arbitrarily changed or in parallel within a range in which no inconsistency occurs in the processing content. Another step may be provided between the respective processing steps. For convenience, a step described as a single step can be divided into a plurality of steps and executed. In addition, for convenience, steps described as a plurality of steps can be executed as a single step.

### (3.1 Flow of Processing Upon Accessing Member Site)

First, the flow of processing of each of the client 20, the server for advertisement determination 10, and the advertisement server 50 when the client 20 accesses the member site provided by the member site providing server 30 will be described.

### (3.1.1 Processing of Client 20)

First, the flow of processing of the client 20 upon accessing the member site provided by the member site providing server 30 will be described referring to Fig. 3. Fig. 3 is a flowchart illustrating the flow of processing of the client 20 upon accessing the member site.

When displaying the webpage of the member site provided by the member site providing server 30 on the browser 211 according to user operation, the browser 211 of the client 20 transmits a request to transmit (a request to browse) the page information 310 to the member site providing server 30 (S301). The member site providing server 30 transmits the page information 310 (for example, information described in HTML or the like) to the client 20 in response to the request. Therefore, the client 20 receives the page information 310(S303).

The browser 211 determines whether or not the cookie for advertisement determination server 221 is set in the browser 211 according to the processing of the tag for cookie processing 311 included in the page information 310 (S305). If the cookie 221 is not set (No in S305), the browser 211 acquires the cookie 221 from the server for advertisement determination 10 under the control by the tag for cookie processing 311 (S307), and sets the cookie 221 in the browser 211 (S309). At this time, since the login to the member site is not yet made, the cookie 221 is in the temporary state.

The browser 211 determines whether or not the cookie for advertisement server 223 is set in the browser 211 according to the processing of the tag for cookie processing 311 (S311). If the cookie 223 is not set (No in S311), the browser 211 acquires the cookie 223 from the advertisement server 50 under the control by the tag for cookie processing 311 (S313), and sets the cookie 223 in the browser 211 (S315).

The processing of S305 to S309 and the processing of S311 to S315 may be reversed. It is also considered that the acquisition of the cookie 223 from the advertisement server 50 is performed upon accessing the advertisement display medium in the advertisement network constituted by the advertisement server 50, even not upon accessing the member site providing server 30.

Thereafter, the browser 211 determines whether or not a user ID is input on a login screen under the control by the tag for cookie processing 311 (S317). If the user ID is input, the browser 211 stores the user ID as the cookie for user ID storage 225 under the control by the tag for cookie processing 311 (S319). In this method, although the user ID is stored as the cookie for user ID storage 225, the invention is not limited thereto, and the user ID may be stored in an appropriate storage area.

Thereafter, if the password as well as the user ID is used from the user and the browser 211 transmits a login request to the member site providing server 30 based on user operation (S321), the browser 211 receives the page information 310 representing a login result from the member site providing server 30 (S323). As a result, if the login fails (No in S325), the browser 211 returns to S317 and starts the processing over.

When the page information 310 to which the login is successful is received (Yes in S325), the browser 211 reads information regarding the user ID, with which the login is successful, from the cookie for user ID storage 225 under the control by the tag for cookie processing 311 included in the page information 310 and transmits the read information to the server for advertisement determination 10 (S327). With this, the server for advertisement determination 10 can know the indication of the successful login and the user ID with which the login is successful. Therefore, the cookie 221 can be recognized as the cookie 221 in the member state. The browser 211 updates the cookie 221 to the member state using the user ID, with which the login is successful, under the control by the tag for cookie processing 311 (S329).

If the processing of S327 and S329 is completed, the cookie for user ID storage 225 is not required. Therefore, the browser 211 deletes the cookie for user ID storage 225 under the control by the tag for cookie processing 311 (S331).

Thereafter, the browser 211 determines whether or not the cookie for advertisement determination server 221 and the cookie for user ID storage 225 match each other under the control by the tag for cookie processing 311 (S333). If both match each other, the advertisement server 50 is requested to coordinate the user ID set in the tag for cookie processing 311 and the identifier set in the cookie 223 (S335). The cookie coordination unit 520 of the advertisement server 50 registers the coordination information between the user ID and the identifier set in the cookie 223 in a DB 540 as the cookie coordination information 541 in response to the request.

With this, the advertisement server 50 can know the user ID of the user, who operates the client 20, based on the identifier received by the cookie for advertisement server 223. Therefore, an advertisement to be distributed to the client 20 can be requested to the server for advertisement determination 10 by designating the user ID.

### (3.1.2 Processing of Server for Advertisement Determination 10)

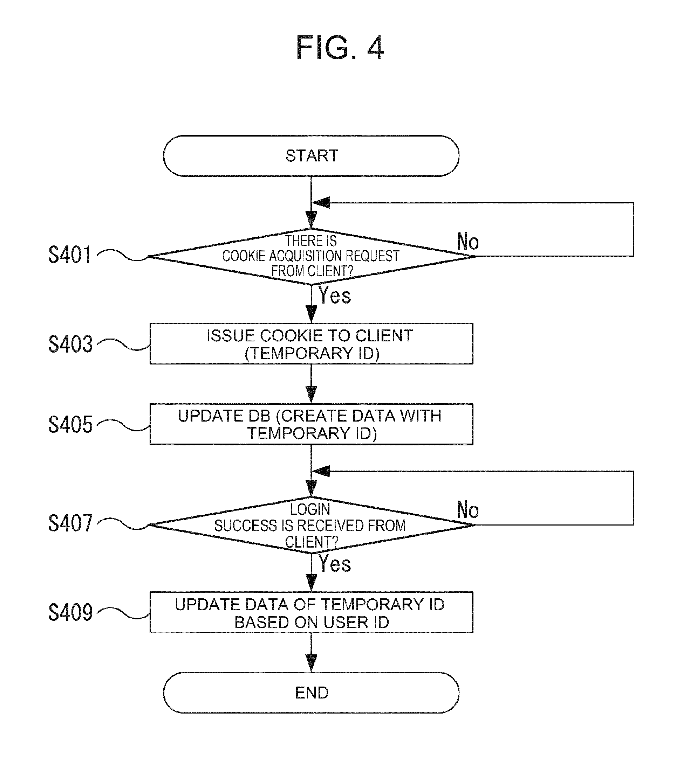

Next, the flow of processing on the server for advertisement determination 10 side when the client 20 accesses the member site will be described referring to Fig. 4. Fig. 4 is a flowchart illustrating the flow of processing of the server for advertisement determination 10 when the client 20 accesses the member site. The processing is processing on the server for advertisement determination 10 side corresponding to the processing on the client 20 side described in "3.1.1" referring to Fig. 3.

If a request to acquire the cookie 221 is received from the client 20 based on the function of the tag for cookie processing 311 (Yes in S401), the cookie processing unit 110 transmits the cookie 221 to the client 20 (S403). The cookie 221 transmitted at this stage is in the temporary state with the temporary ID. The cookie processing unit 110 creates data items in the DB 130 using the temporary ID. With this, the cookie information including the browsing information or the like subsequently transmitted from the client 20 based on the cookie 221 includes the temporary ID. Therefore, data of the behavior history information 135 managed with the temporary ID is updated based on the cookie information.

Thereafter, if a notification indicating a successful login to the member site provided by the member site providing server 30 is received from the client 20 (Yes in S407), the DB 130 is updated based on a user ID included in the notification (S409). Specifically, the behavior history information 135 coordinated only with the temporary ID is coordinated with the user ID, and is coordinated with the member attribute information 133 coordinated with the user ID. With this, when an advertisement determination request with a user ID is received from the advertisement server 50, the advertisement determination unit 120 can select a suitable advertisement referring to the member attribute information 133 and the behavior history information 135 pertaining to the user ID.

### (3.1.3 Processing of Advertisement Server 50)

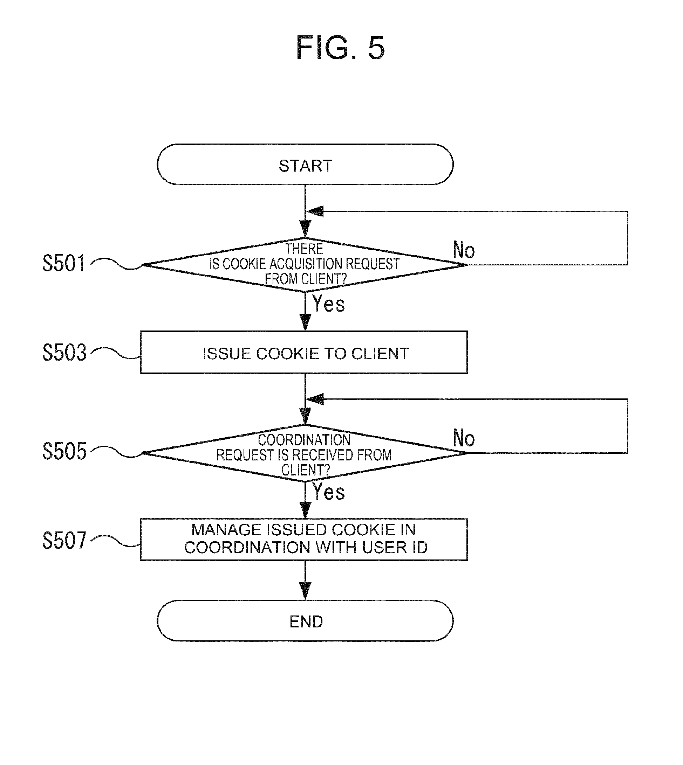

Subsequently, the flow of processing on the advertisement server 50 side when the client 20 accesses the member site will be described referring to Fig. 5. Fig. 5 is a flowchart illustrating the flow of processing of the advertisement server 50 when the client 20 accesses the member site. The processing is processing on the advertisement server 50 side corresponding to the processing on the client 20 side described in "3.1.1" referring to Fig. 3.

If a request to acquire the cookie 223 is received from the client 20 based on the function of the tag for cookie processing 311 (Yes in S501), the cookie issuance unit 510 transmits the cookie 223 to the client 20 (S503). The cookie 223 is assigned with an identifier for identifying each client 20.

Thereafter, if a request to coordinate a cookie is received from the client 20 based on the function of the tag for cookie processing 311 (S505), the cookie coordination unit 520 records the coordination relationship between the user ID included in the coordination request and the identifier of the cookie 223 as the cookie coordination information 541 (S507). The cookie information transmitted from the client 20 based on the cookie 223 is assigned with the identifier described above. Therefore, the advertisement server 50 can know the user ID of the user pertaining to the client 20 by referring to the cookie coordination information 541 with the identifier as a key.

### (3.2 Flow of Processing Upon Accessing Member Site by Different System)

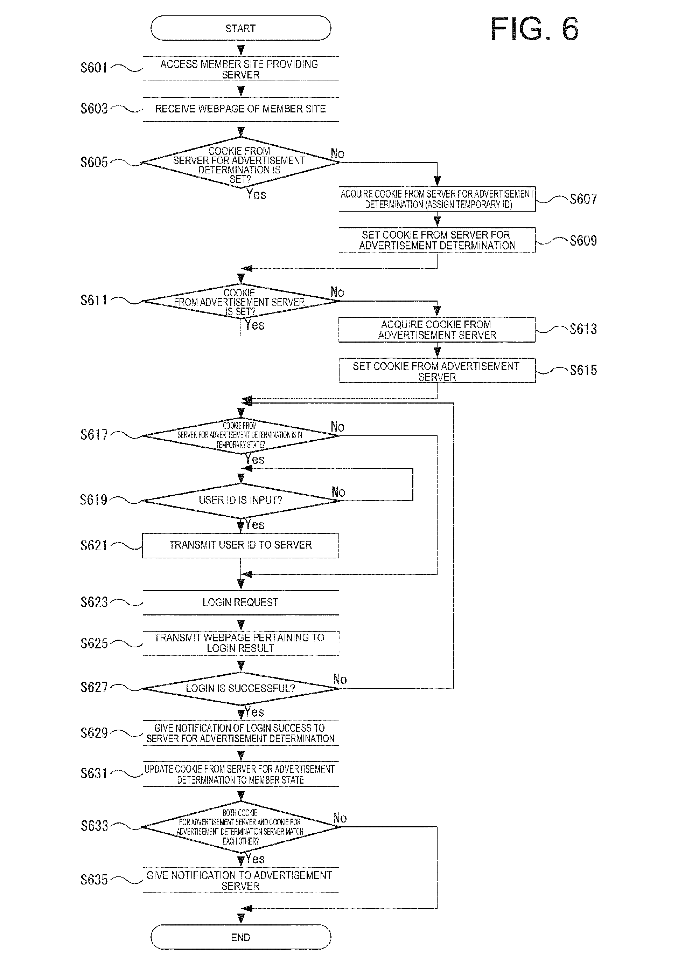

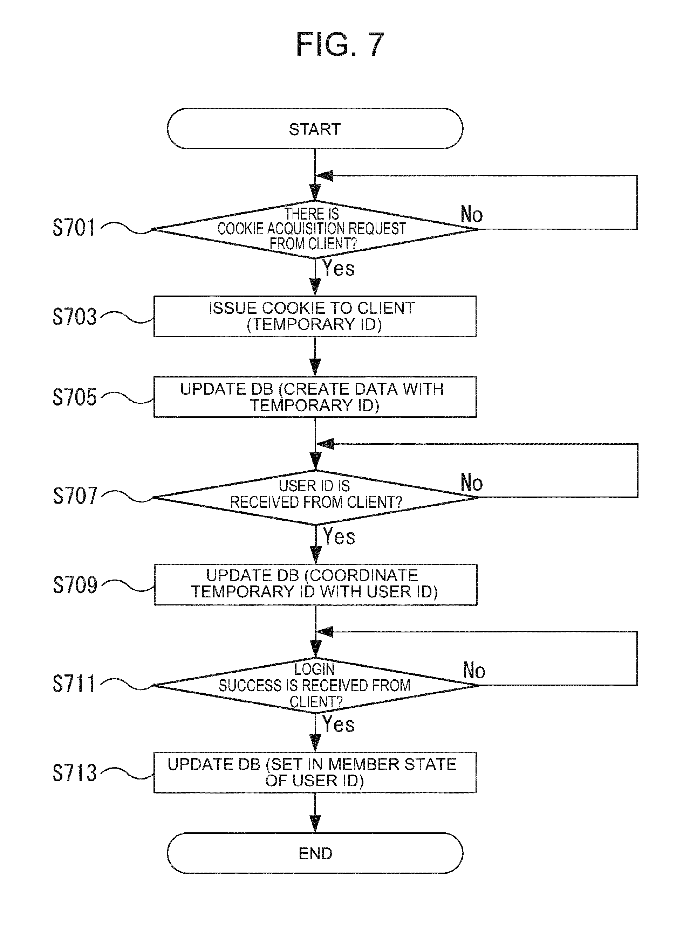

In the processing of "3.1" described above, although the notification of the user ID from the client 20 to the server for advertisement determination 10 and the notification indicating the successful login are performed at one time (S327 of Fig. 3 and S407 of Fig. 4), the invention is not limited thereto, and it is also considered that the invention is not limited, and the notification of the user ID and the notification indicating the successful login are performed at different timings. Hereinafter, the flow of processing in this case will be described referring to Figs. 6 and 7. In this system, since the processing pertaining to the advertisement server 50 is the same as that in "3.1.3", description thereof will be omitted.

### (3.2.1 Processing of Client 20 Pertaining to Different System)

First, the flow of processing of the client 20 will be described referring to Fig. 6. Fig. 6 is a flowchart illustrating the flow of processing of the client 20 pertaining to a system different from "3.1" upon accessing the member site.

Since the processing of S601 to S615 is the same as the processing of S301 to S315 of Fig. 3, description thereof will be omitted.

The browser 211 determines whether or not the cookie for advertisement determination server 221 is in the temporary state under the control by the tag for cookie processing 311 on the login screen of the member site (S617). If the cookie 221 is in the temporary state (Yes in S617), when the user inputs the user ID to an ID input box (Yes in S619), the user ID is transmitted to the server for advertisement determination 10 (S621). That is, while the user ID is stored in the cookie for user ID storage 225 in "3.1", in the example of "3.2", the user ID is transmitted to the server for advertisement determination 10 before the login without being stored in the cookie for user ID storage 225. With this, the cookie for user ID storage 225 on the client 20 side is not required.

Thereafter, if the password as well as the user ID is input from the user and the browser 211 transmits a login request to the member site providing server 30 based on user operation (S623), the browser 211 receives the page information 310 representing a login result from the member site providing server 30 (S625). As a result, if the login fails (No in S627), the browser 211 returns to S617 and starts the processing over.

When the page information 310 to which the login is successful is received (Yes in S627), the browser 211 gives a notification indicating the successful login to the server for advertisement determination 10 under the control by the tag for cookie processing 311 included in the page information 310 (S629). With this, the server for advertisement determination 10 can know the indication of the successful login (S629) and the user ID with which the login is successful (S621). Therefore, the cookie 221 can be recognized as the member state. The browser 211 updates the cookie 221 to the member state (S631).

Since the processing of S633 and S635 is the same as the processing of S333 and S335 of Fig. 3, description thereof will be omitted.

### (3.2.2 Processing of Server for Advertisement Determination 10)

Next, the flow of processing on the server for advertisement determination 10 side when the client 20 accesses the member site will be described referring to Fig. 7. Fig. 7 is a flowchart illustrating the flow of processing pertaining to a system different from "3.1" when the client 20 accesses the member site. The processing is processing on the server for advertisement determination 10 side corresponding to the processing on the client 20 side described in "3.2.1" referring to Fig. 6.

Since the processing of S701 to S705 is the same as the processing of S401 to S405 of Fig. 4, description thereof will be omitted.

If the notification of the user ID is received from the client 20 (S707), the cookie processing unit 110 updates the DB 130 based on the user ID (S709). Specifically, processing for coordinating the behavior history information 135 coordinated only with the temporary ID with the user ID, or the like is considered. However, at this time, it is not certain whether or not the login is successful (the user ID is not always valid). Therefore, the cookie processing unit 110 handles the cookie 223 in the temporary state and performs the coordination with the member attribute information 133, or the like.

Thereafter, if a notification indicating the successful login with the user ID is received from the client 20 (Yes in S711), the cookie processing unit 110 identifies the cookie 223 in the member state, and updates the DB 130 using the user ID received in S709 (S713). Specifically, for example, the cookie processing unit 110 coordinates the user ID with the behavior history information 135 and the member attribute information 133.

With this, when an advertisement determination request designated with the user ID is received from the advertisement server 50, the advertisement determination unit 120 can select a suitable advertisement by referring to the member attribute information 133 and the behavior history information 135 coordinated with the user ID.

### (3.3 Flow of Processing Upon Accessing Advertisement Display Medium)

Subsequently, the flow of processing of each of the client 20, the advertisement server 50, and the server for advertisement determination 10 when the client 20 accesses the website provided by the advertisement display medium providing server 40 will be described.

### (3.3.1 Processing of Client 20)

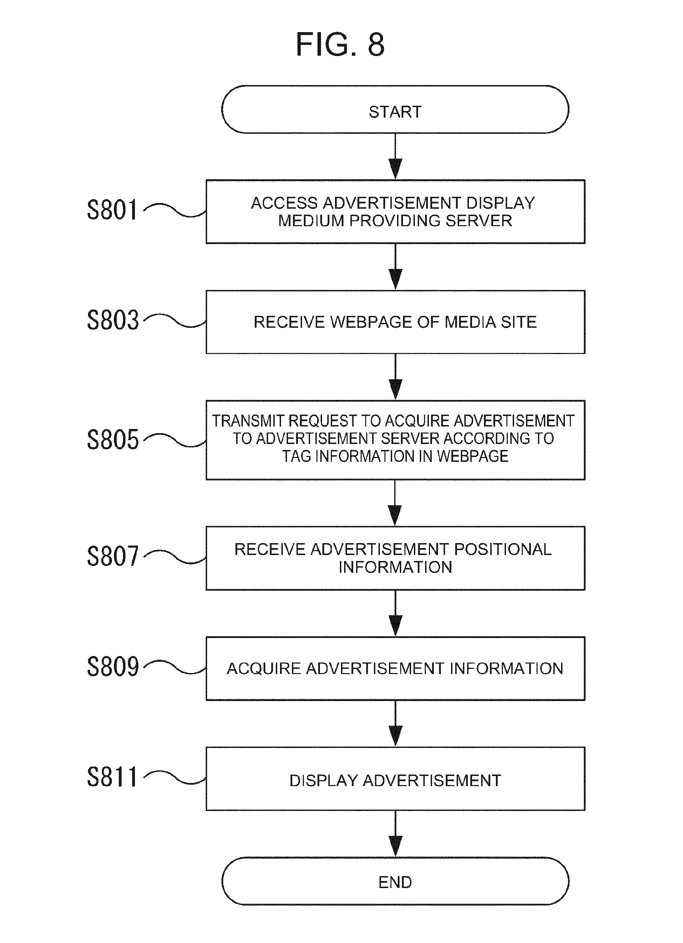

First, the flow of processing of the client 20 upon accessing the website provided by the advertisement display medium providing server 40 will be described referring to Fig. 8. Fig. 8 is a flowchart illustrating the flow of processing of the client 20 upon accessing the website provided by the advertisement display medium providing server 40.

When displaying the webpage of the advertisement display medium provided by the advertisement display medium providing server 40 on the browser 211 according to user operation, the browser 211 of the client 20 transmits a request to transmit (a request to browse) the page information 310 to the advertisement display medium providing server 40 (S801). The advertisement display medium providing server 40 transmits the page information 410 (for example, information described in HTML or the like) to the client 20 in response to the request. Therefore, the client 20 receives the page information 410 (S803).

The browser 211 transmits an advertisement acquisition request to the advertisement server 50 under the control by the tag for advertisement acquisition 411 included in the page information 410 (S805). As a result, advertisement positional information (address information) for accessing the advertisement source 143 pertaining to the advertisement determined by the server for advertisement determination 10 is transmitted from the advertisement server 50. Therefore, the browser 211 receives the advertisement positional information (S807). The browser 211 acquires the advertisement source 143 from the advertisement distribution unit 140 of the server for advertisement determination 10 based on the advertisement positional information (S809), and displays an advertisement image on the display screen based on the advertisement source 143 (S811).

### (3.3.2 Processing of Advertisement Server 50)

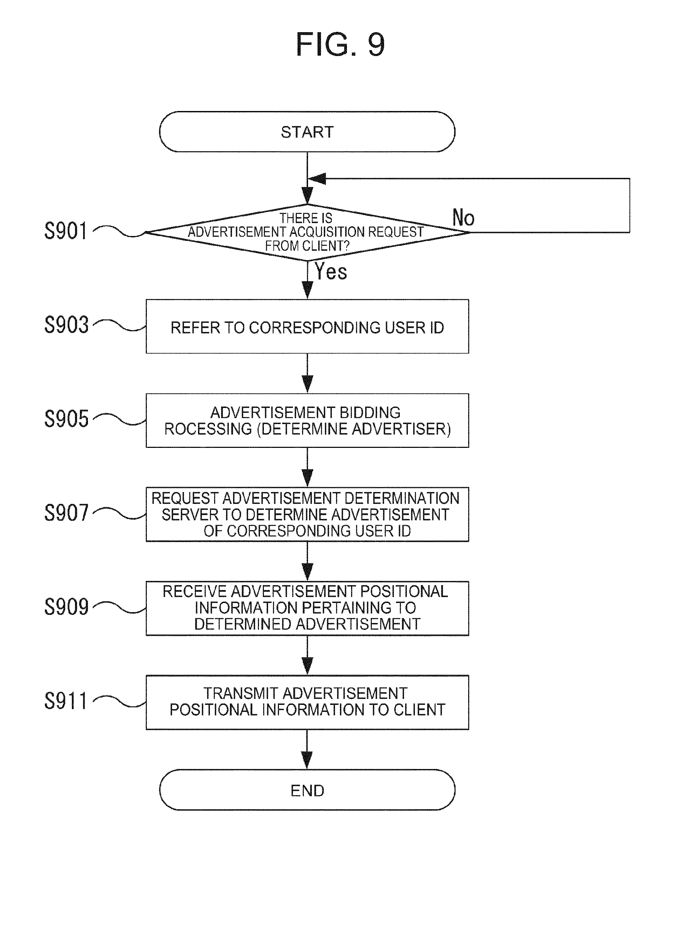

Next, the flow of processing of the advertisement server 50 when accessing the website provided by the advertisement display medium providing server 40 will be described referring to Fig. 9. Fig. 9 is a flowchart illustrating the flow of processing of the advertisement server 50 when the client 20 accesses the website provided by the advertisement display medium providing server 40. That is, the processing is processing on the advertisement server 50 side corresponding to processing on the client 20 described in "3.3.1" referring to Fig. 8.

If the client 20 accesses the advertisement display medium, the client 20 transmits an advertisement acquisition request to the advertisement server 50 in order to acquire advertisement positional information for acquiring an advertisement to be displayed based on the tag for advertisement acquisition 411. If the advertisement server 50 receives the advertisement acquisition request from the client 20 (Yes in S901), the advertisement determination processing unit 530 specifies the user ID (when the user ID is not clear, the temporary ID) corresponding to the identifier of the cookie 223 received from the client by referring to the cookie coordination information 541 (S903).

The advertisement determination processing unit 530 of the advertisement server 50 performs bidding processing for determining an advertiser of an advertisement, which is displayed in an advertisement frame displayed on the client 20, as necessary (S905). The bidding processing can be performed by, for example, RTB. The bidding processing is not required when an advertiser is determined in advance or when the bidding processing is performed on the server for advertisement determination 10 side.

Thereafter, the advertisement determination processing unit 530 of the advertisement server 50 requests the server for advertisement determination 10 to determine an advertisement suitable for the user corresponding to the user ID (when the user ID is not clear, the temporary ID) specified in S903 (S907). As a result, if the advertisement positional information (address information) for acquiring the advertisement source 143 is received from the server for advertisement determination 10 (S909), the advertisement determination processing unit 530 transmits the advertisement positional information to the client 20 (S911).

### (3.3.3 Processing of Server for Advertisement Determination 10)

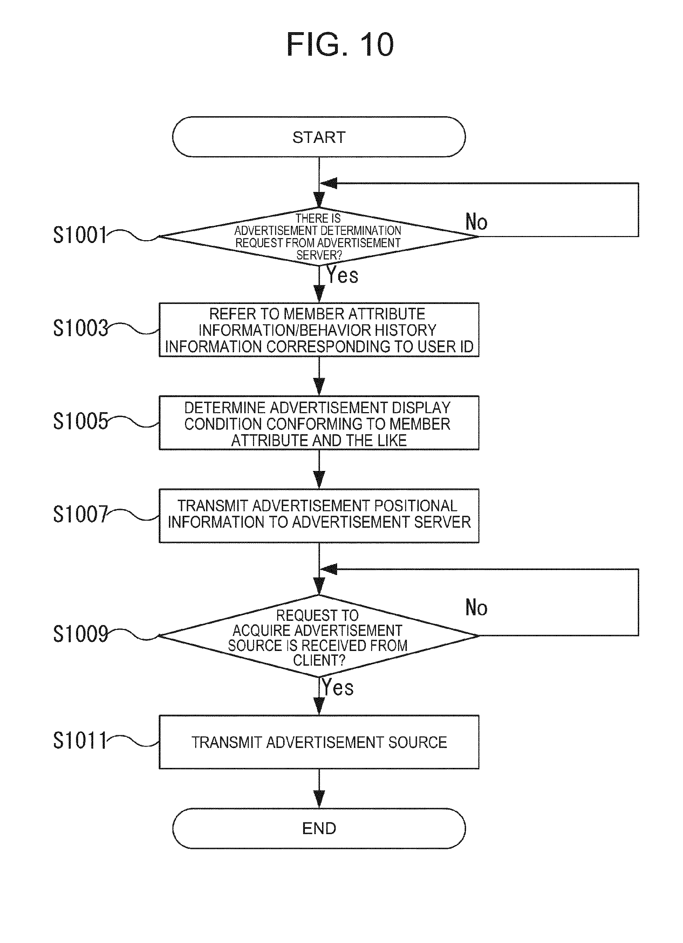

Subsequently, the flow of processing pertaining to the server for advertisement determination 10 after the determination of an advertisement to be displayed on the client 20 is requested from the advertisement server 50 will be described referring to Fig. 10. Fig. 10 is a flowchart illustrating the flow of processing of the server for advertisement determination 10 when an advertisement determination request is received from the advertisement server 50. That is, the processing is processing on the server for advertisement determination 10 side corresponding to the processing on the client 20 or the advertisement server 50 side described in "3.3.1" or "3.3.2" referring to Figs. 8 and 9.

If the advertisement determination request designated with the user ID or the temporary ID is received from the advertisement server 50 (Yes in S1001), the advertisement determination unit 120 refers to the member attribute information 133 or the behavior history information 135 using the user ID or the temporary ID (when only the temporary ID is designated, the member attribute information 133 cannot be referred to). The advertisement determination unit 120 refers to the advertisement display conditions 131 to which the member attribute information 133 or the behavior history information 135 corresponding to the user ID or the temporary ID conforms (S1005), and outputs, to the advertisement server 50, the advertisement positional information for reading the advertisement source 143 corresponding to the conforming advertisement display conditions 131 (S1007).

Thereafter, if a request to acquire the advertisement source 143 is received from the client 20 based on the advertisement positional information (Yes in S1009), the advertisement distribution unit 140 transmits the advertisement source 143 to the client 20 in response to the request (S1011).

### (4 Hardware Configuration)

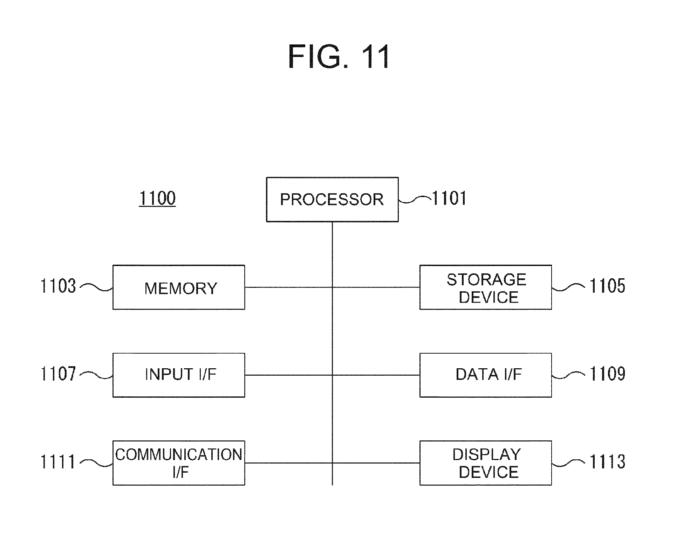

Hereinafter, an example of a hardware configuration when the server for advertisement determination 10 or the advertisement server 50 described above is implemented with the computer 1100 serving as an information processing system will be described referring to Fig. 11. The functions of the server for advertisement determination 10 or the advertisement server 50 may be implemented by a plurality of devices through a network.

As illustrated in Fig. 11, a computer 1100 includes a processor 1101, a memory 1103, a storage device 1105, an input interface (I/F) 1107, a data I/F 1109, a communication I/F 1111, and a display device 1113.

The processor 1101 controls various kinds of processing in the computer 1100 by executing a program stored in the memory 1103. For example, the cookie processing unit 110, the advertisement determination unit 120, or the advertisement distribution unit 140 in the server for advertisement determination 10, and the cookie issuance unit 510, the cookie coordination unit 520, or the advertisement determination processing unit 530 in the advertisement server 50 can be implemented as a program which is temporarily stored in the memory 1103 and primarily runs on the processor 1101.

The memory 1103 is, for example, a storage medium, such as a RAM (Random Access Memory). The memory 1103 temporarily stores program codes of programs to be executed by the processor 1101 or data necessary for executing the programs. For example, in the storage area of the memory 1103, a stack area necessary for executing the programs is secured.

The storage device 1105 is, for example, a nonvolatile storage medium, such as a hard disk or a flash memory. The storage device 1105 stores an operating system, or various programs for implementing the cookie processing unit 110, the advertisement determination unit 120, and the advertisement distribution unit 140 in the server for advertisement determination 10, and the cookie issuance unit 510, the cookie coordination unit 520, and the advertisement determination processing unit 530 in the advertisement server 50. In addition, the storage device 1105 stores various kinds of data corresponding to the DB 130 and the DB 141 in the server for advertisement determination 10, the DB 540 in the advertisement server 50, and the like. The programs or data stored in the storage device 1105 is loaded on the memory 1103 as necessary, and is referred to by the processor 1101.

The input I/F 1107 is a device which is used to receive an input from a user. Specific examples of the input I/F 1107 include a keyboard, a mouse, a touch panel, various sensors, and the like. The input I/F 1107 may be connected to the computer 1100 through, for example, an interface, such as a USB (Universal Serial Bus).

The data I/F 1109 is a device which is used to input data from the outside of the computer 1100. Specific examples of the data I/F 1109 include a drive device which reads data stored in various storage mediums, and the like. It is also considered to provide the data I/F 1109 outside the computer 1100. In this case, the data I/F 1109 is connected to the computer 1100 through, for example, an interface, such as a USB.

The communication I/F 1111 is a device which performs data communication with devices outside the computer 1100 in a wired or wireless manner, for example, through the Internet N. It is also considered to provide the communication I/F 1111 outside the computer 1100. In this case, the communication I/F 1111 is connected to the computer 1100 through, for example, an interface, such as a USB.

The display device 1113 is a device which displays various kinds of information. Specific examples of the display device 1113 include a liquid crystal display, an organic EL (Electro-Luminescence) display, and the like. The display device 1113 may be provided outside the computer 1100. In this case, the display device 1113 is connected to the computer 1100 through, for example, a display cable or the like.

### (5 Effects of This Embodiment)

As described above, in the advertisement distribution system 1 of this embodiment, a suitable advertisement can be showed to the user according to the behavior history or the attribute information of the user. In particular, an advertisement to be distributed can be determined according to the behavior history information 135 before the login to the member site and the detailed member attribute information 133 based on the user ID after the login.

With this, for example, when the user ID cannot be specified, the advertisement distribution becomes possible such that an advertisement pertaining to a commodity with high relevance with a commodity browsed or purchased by the user is distributed and an advertisement is distributed based on information regarding sex, member points, annual income (payment capability), or the like after the identification information of the user is obtained. Therefore, the effect of the advertisement distribution can be increased.

In the advertisement distribution system 1 of this embodiment, the reference to the member attribute information 133 is performed based on the user ID. That is, since it is not necessary to send information regarding the password to the manager of the server for advertisement determination 10, it is possible to avoid the situation in which the user ID and the password flow out in sets. Therefore, high security can be achieved.

In the advertisement distribution system 1 of this embodiment, the advertisement distribution based on the member attribute information 133 or the behavior history information 135 becomes possible to a plurality of advertisement servers 50.

### (6 Note)

It should be noted that the configuration of the embodiments described above may be combined or a part of the components may be replaced with one another. Also, the configuration of the invention is not limited to those of the embodiments described above, and various changes may be made without departing from the subject matter of the invention.

### Reference Signs List

1: advertisement distribution system
10: server for advertisement determination
20: client
30: member site providing server
40: advertisement display medium providing server
50: advertisement server
110: cookie processing unit
120: advertisement determination unit
130: database
131: advertisement display condition
133: member attribute information
135: behavior history information
140: advertisement distribution unit
143: advertisement source
210: CPU
211: browser
220: storage device
221: cookie for advertisement determination server
223: cookie for advertisement server
225: cookie for user ID storage
230: input device
240: communication interface unit
310: page information
311: tag for cookie processing
410: page information
411: tag for advertisement acquisition
510: cookie issuance unit
520: cookie coordination unit
530: advertisement determination processing unit
541: cookie coordination information
1100: computer
1101: processor
1103: memory
1105: storage device
1107: input interface
1109: data interface
1111: communication interface
1113: display device
N: Internet

## Claims

1. An information processing system comprising:
cookie transmission means for transmitting a cookie according to a request from a client terminal based on a program included in webpage information of a member site when the client terminal accesses the member site;
first reception means for receiving a user ID for logging in to the member site transmitted from the client terminal based on the program included in the webpage information of the member site;
second reception means for receiving a notification indicating the completion of the login transmitted from the client terminal based on the program included in the webpage information of the member site when the client terminal logs in to the member site;
information management means for managing cookie information received from the client terminal based on the cookie in coordination with attribute information of a member pertaining to the user ID; and
advertisement determination means for determining an advertisement to be distributed to the client terminal based on attribute information managed by the information management means after the notification indicating the completion of the login is received from the client terminal.

2. The information processing system according to claim 1,
wherein the advertisement determination means determines, based on the user ID, attribute information to be referred to when determining the advertisement.

3. The information processing system according to claim 1,
wherein the first reception means receives the user ID together with the notification indicating the completion of the login received by the second reception means.

4. An information processing system which provides a member site, the information processing system comprising:
first transmission means for transmitting a program which causes a client terminal
to acquire a first cookie from an advertisement determination server,
to transmit, to the advertisement determination server, a user ID input when logging in to the member site, and
to transmit a notification indicating the completion of the login to the advertisement determination server when the login to the member site is completed,
to thereby enable the advertisement determination server to coordinate the first cookie with the user ID.

5. The information processing system according to claim 4,
wherein the program transmitted to the client terminal causes the client terminal to acquire a second cookie from the information processing system, and
the information processing system further comprises:
management means for coordinating information transmitted based on the second cookie with the user ID according to a request from the client terminal.

6. The information processing system according to claim 5, further comprising:
reception means for receiving an advertisement acquisition request from the client terminal; and
second transmission means for transmitting positional information of an advertisement according to the user ID based on the advertisement acquisition request.

7. The information processing system according to claim 6, further comprising:
request means for requesting the advertisement determination server to determine an advertisement according to the user ID based on the advertisement acquisition request.

8. An information processing method which causes an information processing system to perform:
a step of transmitting a cookie in response to a request from a client terminal based on a program included in webpage information of the member site when the client terminal logs in to the member site;
a step of receiving a user ID for logging in to the member site transmitted from the client terminal based on the program included in the webpage information of the member site;
a step of receiving a notification indicating the completion of the login transmitted from the client terminal based on the program included in the webpage information of the member site when the client terminal logs in to the member site;
a step of managing cookie information received from the client terminal based on the cookie in coordination with attribute information of a member pertaining to the user ID; and
a step of determining an advertisement to be distributed to the client terminal based on the attribute information pertaining to the user ID after the notification indicating the completion of the login is received from the client terminal.

9. An information processing method for an information processing system which provides a member site, the information processing method comprising:
a step of causing a client terminal
to acquire a first cookie from an advertisement determination server,
to transmit, to the advertisement determination server, a user ID input when logging in to the member site, and
to transmit a notification indicating the completion of the login to the advertisement determination server when the login to the member site is completed,
to thereby enable the advertisement determination server to coordinate the first cookie with the user ID.
